Europäisches Patentamt

European Patent Office

Office européen des brevets

(11) Numéro de publication: **0 237 382 B1**

## FASCICULE DE BREVET EUROPEEN

(45) Date de publication de fascicule du brevet: **16.12.92**  (51) Int. Cl.⁵: **G06F 15/332**

(21) Numéro de dépôt: **87400278.5**

(22) Date de dépôt: **06.02.87**

(54) **Dispositif de transformée en cosinus d'un signal numérique échantilloné.**

(30) Priorité: **06.02.86 FR 8601629**

(43) Date de publication de la demande:
**16.09.87 Bulletin 87/38**

(45) Mention de la délivrance du brevet:
**16.12.92 Bulletin 92/51**

(84) Etats contractants désignés:
**DE GB NL**

(56) Documents cités:
**US-A- 4 385 363**

**IEEE TRANSACTIONS ON ACOUSTICS, SPEECH, AND SIGNAL PROCESSING, vol. ASSP-28, no. 1, février 1980, pages 27-34, IEEE, New York, US; J. MAKHOUL: "A fast cosine transform in one and two dimensions"**

(73) Titulaire: **FRANCE TELECOM**
**6, Place d'Alleray**
**F-75015 Paris(FR)**

(72) Inventeur: **Duhamel, Pierre**
**97, avenue de Verdun**
**F-92130 Issy les Moulineaux(FR)**

(74) Mandataire: **Fort, Jacques et al**
**CABINET PLASSERAUD 84, rue d'Amsterdam**
**F-75009 Paris(FR)**

Rank Xerox (UK) Business Services

**Description**

L'invention concerne le traitement de signaux numériques échantillonnés pour fournir une transformée en cosinus discrète (TCD ou DCT).

On utilise depuis longtemps les transformées discrètes rapides pour réaliser la compression temporelle ou spatiale de données à transmettre ou à stocker. On a notamment utilisé les transformées simples, telles que la transformée de Walsh-Hadamard, qui ont l'avantage de ne mettre en oeuvre que des circuits simples mais en contrepartie ne fournissent qu'un taux de compression faible.

Le besoin se fait maintenant sentir de disposer de transformées rapides permettant d'atteindre des taux de compression élevés et n'exigeant cependant que des circuits de complexité acceptable et pouvant fonctionner en temps réel.

On a notamment proposé l'utilisation de la TCD, en particulier pour les systèmes de videotexte, du fait qu'elle permet d'augmenter notablement le taux de compression. Mais, même pour des transformées de faible longueur, il est difficile de réaliser des circuits intégrés pouvant fonctionner en temps réel aux fréquences d'échantillonnage requises, même lorsqu'on met en oeuvre les derniers algorithmes proposés, qui réduisent la complexité du calcul. Pratiquement, on peut tout juste arriver à des fréquences d'échantillonnage de 10 MHz pour des transformées de longueur huit.

On connait également (document US-A-4 385 363) un dispositif de génération de la transformée en cosinus discrète d'un signal. Ce dispositif utilise des circuits élémentaires fournissant la somme et la différence de deux entrées. Mais le dispositif a une disposition pipelinée à plusieurs étages dont chacun comprend des additionneurs et des multiplieurs. Il implémente l'algorithme de Chen et Fralick et cette conception conduit à une architecture complexe.

Le document dans IEEE TRANSACTIONS ON ACOUSTICS, SPEECH, AND SIGNAL PROCESSING, vol. ASSP-28, no. 1, février 1980, pages 27-34, IEEE, New York, US ; J. MAKHOUL : "A fast cosine transform in one and two dimensions" fait enfin connaître un procédé de traitement de signaux numériques échantillonnés pour fournir une transformée en cosinus discrète (TCD) rapide.

L'invention vise à fournir un dispositif de traitement de signal échantillonné capable de fournir la transformée en cosinus discrète du signal, ayant une architecture plus simple que celle des dispositifs connus et utilisant pour ce faire un nouvel algorithme obtenu en faisant apparaître une équivalence partielle entre TCD et convolution cyclique, n'exigeant pas plus de multiplications que le calcul d'une convolution cyclique de même longueur.

Dans ce but, l'invention propose notamment un dispositif de détermination de la transformée en cosinus discrète $X_k$ d'un signal conforme à la revendication 1. Elle propose également un dispositif conforme à la revendication 2. Dans ce dernier cas, les coefficients X de la transformée apparaissent naturellement au cours du calcul de convolution, avant même le résultat final de cette dernière. Il devient alors inutile de réaliser la transformée $TNE^{-1}$ complètement sur la plupart des coefficients X.

L'invention sera mieux comprise à la lecture de la description qui suit de modes particuliers d'exécution de l'invention, donnés à titre d'exemples non limitatifs. La description se réfère aux dessins qui l'accompagnent, dans lesquels :

- la Figure 1 est un schéma de principe montrant les éléments à ajouter à un convolueur cyclique, qui peut avoir une constitution classique, pour réaliser un dispositif fournissant la transformée en cosinus ;
- la Figure 2 est un schéma montrant la mise en oeuvre habituelle d'un convolueur à partir des TNE des échantillons de signal et de la séquence générée ou mémorisée ;
- la Figure 3 montre schématiquement les simplifications intervenant dans la $TNE^{-1}$, permettant d'obtenir la TCD des échantillons d 'un signal avant le calcul complet de la convolution ;
- la Figure 4, similaire à la Figure 2, montre une variante de réalisation faisant apparaitre les blocs "codage" et "changement de base" éventuellement nécessaires à la simplification de l'arithmétique modulo intervenant dans la TNE.

Avant de décrire des dispositifs suivant l'invention, il est nécessaire de donner la démarche mathématique, faisant apparaître l'équivalence entre TCD et convolution cyclique, qui justifie l'architecture des dispositifs.

Deux changements de variable successifs permettent de passer de l'expression classique de la TCD (formule 1 ci-dessus) à une convolution cyclique, de la forme :

$$\sum_{i=0}^{N-1} x_i \cdot h_{n-i} \cdot \text{modulo } N \qquad (2)$$

Le premier changement de variable vise à faire apparaître, dans le terme en cosinus, la valeur $4i+1$ qui est plus facilement générée que la grandeur $2i+1$. Il consiste à substituer à x, dans la formule (1), la variable x' telle que :

$$x'_i = x_{2i}$$
$$x'_{N-i+1} = x_{2i+1} \text{ pour } x'_0, \ldots, x'_{N/2-1}$$

Ce changement de variable distribue les valeurs x' en deux groupes, correspondant l'un aux valeurs paires $x_{2i}$ de x, l'autre aux valeurs impaires $x_{2i+1}$.

On obtient alors :

$$X_k = \sum_{i=0}^{N-1} x'_i \cdot \cos[(2\pi/4N)(4i+1)k] \qquad (3)$$

Un second changement de variable va ensuite permettre de faire intervenir, dans la définition de la transformée, la différence de deux indices au lieu d'un produit. On arrivera ainsi à la formulation classique (2) de la convolution cyclique, avec son terme $h_{n-i}$.

Pour obtenir ce résultat, on fait appel à la correspondance entre l'ensemble des nombres entiers congrus à 1, modulo 4 et inférieurs à $2^{n+2}$ et l'ensemble des entiers inférieurs à $2^n$. On peut en effet écrire :

$$4i+1 = 5^{u_i} \bmod 2^{n+2} \qquad (4)$$

pour $i = 0, 1, \ldots, 2^n-1$.

On utilisera par la suite, pour faciliter l'écriture des équations, la notation :

$$4i+1 = \langle 5^{u_i} \rangle_{2^{n+2}}$$

La formule (3) devient alors :

$$X_k = \sum_{i=0}^{N-1} x'_i \cdot \cos[(2\pi/4N)\langle 5^{u_i}\rangle_{2^{n+2}} k] \qquad (5)$$

Dans cette formule, le facteur $x'_i$ peut s'écrire, en tenant compte de l'équivalence indiquée par la formule (4) :

$$x'_i = x'_{\langle 5^{ui}\rangle_{2^{n+2}}} \frac{-1}{4} \qquad (6)$$

et en posant :

$$x''_i = x'_{\langle 5^i\rangle_{4N}} \frac{-1}{4} \qquad (6bis)$$

on trouve :

$$X_k = \sum_{i=0}^{N-1} x''_i \cdot \cos\left[(2\pi/4N)\ \langle 5^i\rangle_{4N}\ k\right] \qquad (7)$$

Pour mieux faire apparaître l'équivalence entre TCD et convolution cyclique, on utilisera maintenant une notation polynomiale en considérant chacun des coefficients $X_k$ comme un coefficient d'un polynôme d'une variable muette z. On sait qu'une variable est qualifiée de "muette" lorsqu'elle ne correspond à aucune variable réelle et n'est introduite que pour la commodité du calcul. On définit deux polynômes U et V comportant N termes, chaque terme correspondant à une puissance de z entre 0 et N-1 :

$$U(z) = \sum_{i=0}^{N} x''_i \cdot z^i \qquad (8)$$

$$V_k(z) = \sum_{i=0}^{N-1} \cos\left[(2\pi/4N)\ \langle 5^i\rangle_{4N}\ k\right]z^i \qquad (9)$$

$X_k$ sera alors le terme constant du produit polynominal de $U(z^{-1})$ et de $V_k(z)$. En d'autres termes, $X_k$ est le terme constant (correspondant à $z^0$) du produit :

$U(z^{-1}) \cdot V_k(z) \bmod (z^N-1)$    (10)

On peut montrer que tous les termes impairs, c'est-à-dire de la forme $V_{2k'+1}(z)$ appartiennent à une même famille de polynômes décalés les uns des autres d'une puissance de z modulo $z^{N-1}$. Cela découle des calculs qui précèdent car l'expression (1), lorsqu'elle est écrite pour les valeurs impaires $k = 2k'+1$, est symétrique en i et k.

Si on connait $V_1$ on peut donc en déduire toutes les autres valeurs impaires $V_{2k'+1}$.

Pour faciliter les calculs, on introduira maintenant la séquence :

$$w_i^{(N)} = 1 + \sum_{j=0}^{n-1} \cos[(2\pi/4N) \langle 5^i \rangle_{4N} 2^j] \qquad (11)$$

où n est la même puissance de 2 que celle fixant la longueur requise M et j est un indice d'incrémentation distinct de i.

Cette séquence $W_i$ peut être calculée une fois pour toutes et mémorisée dans un dispositif de détermination de la TCD.

On va maintenant voir que la TCD peut être obtenue par convolution cyclique de la séquence $(x_i)$ des échantillons du signal avec la séquence $(w_i)$ mémorisée et quelques additions supplémentaires.

Pour cela, il suffit de remarquer que le polynôme W(z), dont les w sont les coefficients des puissances successives de la variable muette z, s'écrit :

$$W^{(N)}(z) = \sum_{i=0}^{N-1} w_i^{(N)} . z_i$$

$$= V_0(z) + V_{2^0}(z) + V_{2^1}(z) + \ldots + V_{2^j}(z) + V_{2^{n-1}}(z) \qquad (12)$$

et tous les $V_k$ de z peuvent s'obtenir par addition de versions décalées successives de W(z) car :

$$2V_1(z) = W^{(N)}(z) - z^{N/2} . W^{(N)}(z) \bmod (z^N-1) \qquad (13)$$

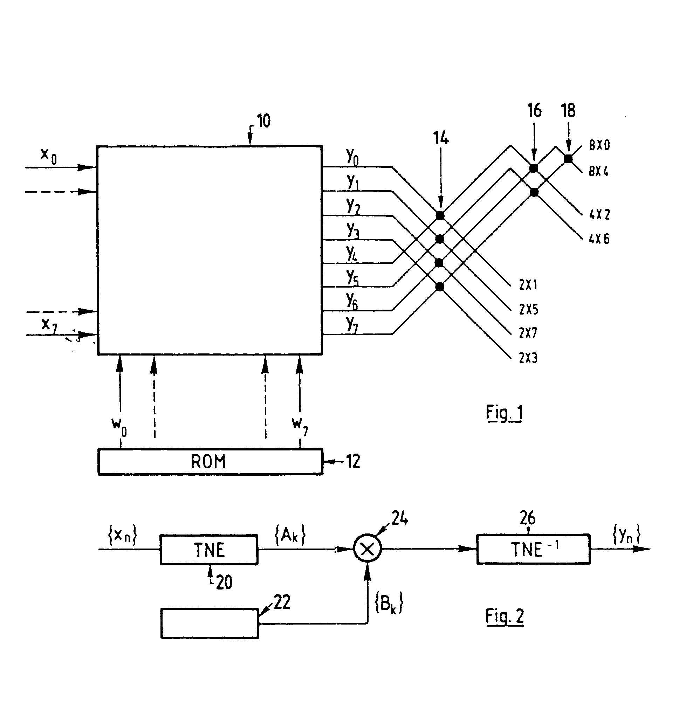

En particulier, le polynôme est le suivant dans le cas, illustré en figure 1, d'une transformée de longeur $N+8$:

$$2X_1 + 2X_5.z + 2X_7.z^2 + 2X_3 z^3 = y_0-y_4 + (y_1-y_5)z + (y_2-y_6)z^2 + (y_3-y_7)z^3.$$

Or, on a indiqué plus haut que tous les termes impairs $V_{2k'+1}$ appartiennent à une même famille et se déduisent les uns des autres par décalage. Tous les termes impairs $V_{2k'+1}$ se déduisent donc de $V_1(z)$ par décalage. De même, tous les termes pairs $\overline{V_{2(2k'+1)}}(z)$ se déduisent de $V_2$ par décalage. En effet, on peut remarquer la similitude entre l'expression $\overline{2V_1(z)}$, donnée par la formule (13), et celle de $2W^{(N/2)}(z)$ :

$$2W^{(N/2)}(z) = W^{(N)}(z) + z^{N/2}.W^{(N)}(z) \bmod (z^N-1) \qquad (14)$$

et on peut en tirer les termes congrus à 2 mod 4 de la transformée en cosinus :

$$2V_2(z) = W^{(N/2)}-z^{N/4}.W^{(N/2)}(z) \qquad (15)$$

et tous les $V_{2(2k'+1)}(z)$ par décalages successifs de $V_2$.

Par itération, on obtiendra ainsi successivement :

$V_{2k'+1}(z)$
$V_{2(2k'+1)}(z)$
$V_{2\ell(2k'+1)}(z)$
$V_{N/2}(z)$
$V_N(z) = V_0$

c'est-à-dire, pour $N = 8$, successivement :

$V_1, V_3, V_5, V_7$
$V_2, V_6$

$V_4$

$V_0$

Exprimé sous une autre forme, on peut présenter $V_k(z)$ sous la forme :

$$V_k(z) = W^{(N)}(z) \sum_{\ell=0}^{M} z^{\alpha_\ell} \bmod (z^N - 1) \qquad (16)$$

où $\alpha_\ell$ est une variable muette.

La formule (16) fait apparaître que tous les $V_k$ sont formés par la somme de versions décalées, au sens polynominal (c'est-à-dire découlant les unes des autres par multiplication par z).

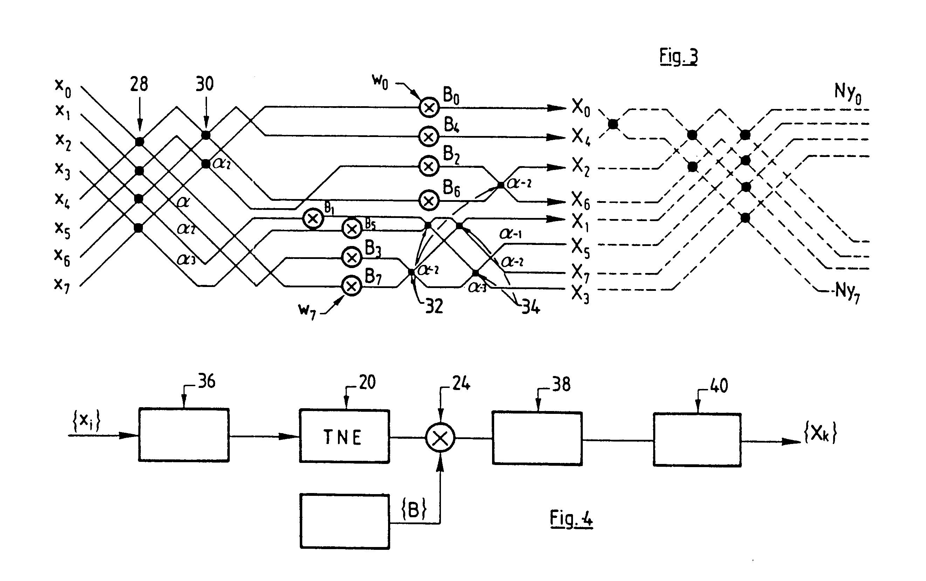

La seule connaissance du produit de polynômes $Y(z)$ qui est constituée par les termes $y_0, ..., y_7$ apparaissant sur la figure 2 dans le cas particulier d'une taille égale à 8 :

$$Y(z) = \sum_{\ell=0}^{N-1} y_\ell = U(z^{-1}) \cdot W^{(N)}(z) \bmod (z^N - 1) \qquad (17)$$

permet donc de retrouver $X_k$, terme constant (c'est-à-dire facteur correspondant à la puissance zéro de z) du produit $U(z^{-1}).W(z)$ car, si l'on tient compte de la formule (16) :

$$U(z^{-1}) \cdot V_k(z) = U(z^{-1}).W(z) \sum_{\ell=0}^{M} z^{\alpha_\ell} \bmod (z^N - 1)$$

et, d'après (17) :

$$= Y(z) \sum_{\ell=0}^{M} z^{\alpha_\ell} \bmod (z^N - 1) \qquad (18)$$

Or, le produit de polynômes $U(z^{-1}).W(z)$ est une autre écriture de la convolution cyclique de $\{u_i\}$ par $\{w_{-i}\} =$

$$y_n = \sum_{\ell=0}^{N-1} x_\ell \cdot w_{\langle \ell - n \rangle N} \qquad (19)$$

que l'on peut comparer à la formule classique (2) de la convolution cyclique.

En résumé, on voit que la TCD peut être obtenue en effectuant en séquence :
- une opération de convolution cyclique classique faisant intervenir les échantillons d'entrée x et les valeurs w qui peuvent être calculées et mémorisées une fois pour toutes, pour chaque valeur de N ;
- les opérations représentées par les équations (15) et (16) qui se limitent à des additions et peuvent être représentées sous la forme des "papillons" intervenant dans les transformées de Fourier, a et b étant les entrées :

La Figure 1 montre, à titre d'exemple, une constitution possible d'un dispositif de transformation en cosinus utilisant un convolueur cyclique pouvant avoir l'une quelconque des constitutions classiques connues. Il peut notamment s'agir d'un convolueur cyclique de type systolique tel que celui décrit dans l'article de H. Barral et autres "Circuits for digital signal processing", Proceedings of ICASSP 84, Paper No. 44-9, complété de connexions pour le rendre cyclique. Le convolueur 10 représenté est prévu pour réaliser une transformée en cosinus de longueur N = 8. Il comporte huit entrées destinées à recevoir les échantillons $x_0,...,x_7$ et huit entrées $w_0,...,w_7$ destinées à recevoir les valeurs w, mémorisées dans une mémoire morte 12. Les valeurs de sortie $y_0,...,y_7$ fournies par le convolueur sont celles données par la formule (19) ci-dessus. Ces valeurs doivent être combinées par des opérateurs qui se limitent à des opérations d'addition ou de soustraction. Un premier jeu d'opérateurs 14 de type "papillon", correspondant à, l'algorithme (13) ci-dessus fournit directement le double des valeurs de $X_1$, $X_5$, $X_7$ et $X_3$ (termes impairs). Un second jeu, 16, constitué de deux opérateurs identiques aux quatre opérateurs 14, fournit, à partir des sorties additives des opérateurs 14, le quadruple de la valeur de $X_2$ et de $X_5$. Enfin, un dernier opérateur 18 fournit l'octuple de la valeur de $X_0$ et de $X_4$.

L'existence d'une équivalence entre TCD et convolution cyclique permet de calculer la complexité multiplicative des TCD de longueur $2^n$ quelconque, c'est-à-dire le nombre minimum de multiplications nécessaire au calcul d'une TCD de longueur $2^n$. En effet, puisque le passage de la convolution à la TCD ne nécessite pas de multiplication, la TCD et la convolution ont la même complexité multiplicative :

$$\mu(\text{conv.}2^n) = 2^{n+1} - n - 1$$

Au surplus, il faut noter que l'une des multiplications est triviale, c'est-à-dire consiste en une multiplication par un facteur appartenant à l'ensemble des rationnels. En conséquence :

$$\mu(\text{TCD } 2^n) = 2^{n+1} - n - 2.$$

Dans l'exemple choisi plus haut d'une longueur $N = 8 = 2^3$, il sera nécessaire d'effectuer $2^4 - 3 - 2 = 11$ multiplications.

Les technologies actuelles courantes permettent d'effectuer une multiplication à une cadence de 10 MHz. Si l'on souhaite réaliser cette même cadence dans des circuits pour répondre par exemple aux besoins des systèmes de photo-videotext, il sera nécessaire d'intégrer dans le circuit au moins deux multiplications, et souvent davantage du fait du manque de régularité des produits.

Pour des mots de douze bits en entrée, on peut atteindre, avec un seul convolueur complet du genre décrit ci-dessus, une vitesse de l'ordre de 300 kHz pour des niveaux de douze éléments binaires en entrée.

Dans la variante de réalisation montrée en Figure 2, le dispositif utilise un transformateur en nombre entier, 20. Les valeurs $(x_n)$ sont appliquées à l'entrée d'un transformateur en nombre entier ou TNE qui fournit une séquence $(A_k)$ :

$$A_k = \sum_{n=0}^{N-1} \alpha^{nk} \cdot x_n \qquad \mod M$$

où a est une racine positive $N^{\text{ième}}$ de l'unité modulo M.

Le dispositif comprend également une mémoire 22 dans laquelle sont stockées les transformées en nombre entier $(B_k)$ de la séquence $(w_n)$ de valeur w. Les valeurs $B_k$ sont calculées une fois pour toutes par la formule

$$B_k = \sum_{n=0}^{N-1} \alpha^{nk} \cdot w_n \qquad \mod M$$

Les transformées en nombre entier sont appliquées à un multiplicateur modulo M 24 qui fournit la transformée en nombre entier de la séquence résultat $(y_n)$ qui est obtenue à l'aide d'un tranformateur en nombre entier inverse ou $TNE^{-1}$ 26.

En choisissant convenablement N et M, on peut avoir une valeur simple de $\alpha$. On peut notamment prendre une valeur de a égale à une puissance de 2. Dans ce cas, les transformateurs TNE et $TNE^{-1}$ ne comportent pas de multiplication, mais uniquement des décalages ce qui simplifie la réalisation matérielle du circuit.

De plus, l'utilisation de transformateurs en nombre entier permet une simplification supplémentaire , si l'on tient compte que les réductions de $Y(z) = \Sigma\, y_n.z^n$ modulo (les polynômes cyclotomiques) interviennent comme variables intermédiaires à l'intérieur des algorithmes de TNE. On peut interrompre le calcul de $TNE^{-1}$ intervenant en Figure 2 avant son terme.

La Figure 3 est un graphe d'un dispositif de détermination de transformée en cosinus qui utilise l'algorithme simplifié, pour une longueur N = 8. Sur le graphe apparaissent les groupes d'opérateurs en papillon 28, 30, 32 et 34 ayant la même constitution que ceux utilisés dans la Figure 1. Toutefois, les opérateurs de la Figure 1 sont des opérateurs courants alors que ceux de la Figure 3 fournissent le résultat modulo M et peuvent être du genre décrit dans la demande FR 84 14624. Les multiplieurs $B_0$ à $B_7$ reçoivent, d'une part, la séquence de valeurs fournie par les transformateurs 28 et 30 à partir des valeurs $x_0,...,\ x_7$ et, d'autre part, les valeurs $B_0,...,\ B_7$, TNE des valeurs w correspondantes. Ces valeurs $B_0,...,\ B_7$ peuvent être fournies par une mémoire morte ou déterminées par les multiplieurs eux-mêmes, à partir des valeurs w.

Le transformateur de la Figure 3 présente l'avantage de n'exiger qu'une multiplication générale (modulo M) par point. En conséquence, les circuits peuvent être réalisés de façon à fonctionner à une vitesse d'échantillonnage égale à la vitesse de cadencement du multiplieur pouvant être de 10 MHz avec les technologies disponibles à l'heure actuelle. En utilisant des schémas de multiplieur particuliers, tels que celui montré en Figure 11 de la demande FR 84 14624, on peut encore augmenter la vitesse.

On peut constituer des dispositifs similaires à celui de la Figure 3, mais correspondant à d'autres valeurs de N. Il est particulièrement intéressant, dans tous les cas, d'adopter des valeurs particulières de M qui se traduisent par une simplification de l'architecture. C'est notamment le cas lorsqu'on adopte pour M un nombre de Fermat $2^{2q} + 1$, un pseudo nombre de Fermat $2^{2q} + 1$, ou un nombre du type $M = 2^{2q} - 2^q + 1$. Par exemple, pour un nombre du dernier type avec q = 12, $\alpha = 2^9$, toute multiplication par une puissance de $\alpha$ est composée uniquement de rotations, complémentations et, éventuellement, d'une addition.

Dans une variante de réalisation de l'invention, la transformation en nombres entiers est réalisée en utilisant un changement de base et un codage du type décrit dans la demande de brevet FR 84 14624 (Duhamel et Hollmann). Dans ce cas, le schéma général de la TCD peut se limiter à celui donné en Figure 4.

Le dispositif de la Figure 4 comprend, en amont du transformateur en nombre entier 20, un circuit 36 de codage et de changement de base. La séquence {B} appliquée au multiplieur 24 est également obtenue par codage, changement de base et TNE. La séquence de sortie du multiplieur 24 n'a pas à être soumise à la totalité d'une TNE inverse, puisque les réductions de $Y(z)$ interviennent comme variables intermédiaires. Le calcul est arrêté à ce stade, ce qui permet de simplifier le transformateur $TNE^{-1}$ 38. Les résultats obtenus sont soumis à décodage et retour à la base initiale dans un circuit 40, qui fournit la séquence $(X_k)$.

Les composants 20, 24 et 38 de la Figure 4 peuvent alors être constitués par le montage en traits pleins de la Figure 3, qui devrait normalement être complété par les composants en tirets. Les entrées $x_i$ sont appliquées à ce montage après codage en 36 et on obtiendrait sur la sortie les valeurs $Ny_i$ codées ; cette partie en tirets n'est pas nécessaire et ce sont les $X_i$ qui sont appliqués au décodeur 40.

L'ensemble du circuit de la Figure 3 (y compris la partie en tirets) peut constituer un convolueur 10 utilisable dans le dispositif de la Figure 1.

Les constitutions de convolueur mentionnées ci-dessus ne sont pas les seules possibles. On peut en particulier utiliser un convolueur utilisant des circuits mettant en oeuvre une arithmétique distribuée, telle que celle décrite dans "Digital Filter Structures Described by Distributed Arithmetic", C. Sydney Burrus, IEEE Transactions on circuits and systems, cas. 24, No. 12, Dec. 77, pp. 674-680 et dans "A Prime Factor FTT Algorithm Using Distributed Arithmetic" par Shuni Chu et al, IEEE Transactions an Acoustics, Speech and signal processing, Vol. ASSP-30, No. 2, Avril 82, pp. 217-226.

## Revendications

1. Dispositif de détermination de la transformée en cosinus discrète $X_k$ d'un signal x représenté par N échantillons numériques $x_0,..., x_i,... x_{N-1}$, où N est une puissance $2^n$ de 2 :

$$X_k = \sum_{i=0}^{N-1} x_i . \cos \left[ (2\pi/4N) (2i+1)k \right]$$

caractérisé en ce qu'il comporte un convolueur (10) entre les échantillons $x_i$ et une séquence mémorisée d'échantillons $w_i(N)$ :

$$w_i(N) = 1 + \sum_{j=0}^{n-1} \cos \left[ (2\pi/4N) \langle 5^i \rangle_{4N} 2^j \right]$$

et en ce qu'il comporte de plus un ensemble de circuits élémentaires identiques (14,16,18) groupés en plusieurs jeux, ayant chacun deux entrées et deux sorties dont l'une fournit la somme et l'autre la différence des deux entrées, les circuits élémentaires du premier jeu (14) recevant sur leurs deux entrées les échantillons du produit de convolution d'indices séparés de N/2 entre eux, fournissant directement les valeurs impaires (X1, X3,...) tandis que les circuits des jeux suivants fournissent, par combinaison des sommes, les valeurs paires (X0,..., X8) successives sur leurs sorties de soustraction.

2. Dispositif de détermination de la transformée en cosinus discrète $X_k$ d'un signal x représenté par N échantillons numériques $x_0,..., x_i,..., x_{N-1}$, où N est une puissance $2^n$ de 2 :

$$X_k = \sum_{i=0}^{N-1} x_i . \cos \left[ (2\pi/4N) (2i+1)k \right] \qquad (1)$$

caractérisé en ce qu'il comporte :
- des moyens (20) pour soumettre les échantillons $x_i$ à une transformée en nombres entiers (TNE) et fournir une séquence $a_k$ :

$$A_k = \sum_{i=0}^{N-1} \alpha^{ik} . x_i \qquad \text{modulo M,}$$

$\alpha$ étant une constante égale à une racine positive Nème de l'unité modulo M,

- des moyens pour mémoriser une séquence $B_k$ représentant les TNE $B_k$ d'une séquence mémorisée d'échantillons

$$w_i^{(N)},$$

ladite séquence étant de la forme :

$$B_k = \sum_{i=0}^{N-1} \alpha^{ik} \cdot w_i^{(N)} \qquad modulo\ M$$

où :

$$w_i^{(N)} = 1 + \sum_{j=0}^{n-1} \cos\ [(2\pi/4N)\ \langle 5^i \rangle_{4N}\ 2^j]$$

- des moyens pour former un produit modulo M (M étant un nombre entier tel que $\alpha$ soit une racine positive Nième de M) entre la séquence $A_k$ et la séquence $B_k$,
- dans lequel les moyens de TNE comprennent un ensemble de circuits élémentaires indentiques groupés en plusieurs jeux successifs (28,30), chaque circuit élémentaire ayant deux entrées et deux sorties dont l'une fournit la somme et l'autre la différence des deux entrées, les N/2 circuits élémentaires du premier jeu recevant sur leurs entrées les échantillons d'indices séparés de N/2 entre eux, fournissant sur leurs sorties soustractives les TNE $A_k$ d'ordre impair et fournissant sur leurs sorties additives des données appliquées aux entrées du jeu suivant.

## Claims

1. Device for computing the discrete cosine transform $X_k$ of a signal x represented by N digitized samples $x_0$, ..., $x_i$, ... $x_{N-1}$, where N is a power of 2:

$$X_k = \sum_{i=0}^{N-1} x_i \cos[(2\ \Pi/4N)\ (2i+1)k],$$

characterized in that it comprises a convolver (10) between the samples $x_i$ and a stored sequence of samples $w_i$ (N):

$$w_i^{(N)} = 1 + \sum_{j=0}^{n-1} \cos\ [(2\Pi/4N)\ \langle 5^i \rangle_{4N}\ 2^j]$$

and in that it further comprises a set of identical elementary circuits (14,16,18) distributed into a plurality of banks, each having two inputs and two outputs one of which delivers the sum and the other the difference of the two inputs, the elementary circuits of the first bank (14) receiving, on their two inputs, the samples of the convolution product whose indices are separated by N/2 from each other, directly delivering the odd values (X1,X3,...) while the circuits of the following banks deliver, by combination of the sums, the successive even values (X0,...X8) on their subtraction outputs.

2. Device for computing the discrete cosine transform $X_k$ of a signal x represented by N digitized samples $x_0$, ..., $x_i$,...$x_{N-1}$, where N is a power of 2:

$$X_k = \sum_{i=0}^{N-1} x_i \cos[(2\Pi/4N)(2i+1)k], \qquad\qquad (1)$$

characterized in that it comprises:
- means (20) for subjecting the samples $x_i$ to a number theoretical transform (NTT) and delivering a sequence $a_k$:

$$A_K = \sum_{n=0}^{N-1} \alpha^{ik} \cdot x_i \qquad modulo\ M$$

$\alpha$ being a constant value equal to a Nth positive root of the unity modulo M,
- means for storing a sequence $B_k$ representing the NTTs $B_k$ of a stored sequence of samples $w_i^{(N)}$, said sequence being of the form:

$$B_k = \sum_{i=0}^{N-1} \alpha^{ik} \cdot w_i^{(N)} \qquad modulo\ M$$

where:

$$w_i^{(N)} = 1 + \sum_{j=0}^{n-1} \cos\ [(2\Pi/4N)\ <5^i>_{4N}\ 2^j]$$

- means for forming a modulo M product (M being an integer such that $\alpha$ be a Nth positive root of M) of sequence $A_k$ and sequence $B_k$,
- wherein the NTT forming means comprise a set of mutually identical elementary circuits distributed into a plurality of successive banks (28,30), each elementary circuit having two inputs and two outputs one of which delivers the sum and the other the difference of the two inputs, the N/2 elementary circuits of the first bank receiving, on their respective inputs, the samples having indices which are mutually separated by N/2, delivering on their subtracting outputs the NTTs $A_k$ of odd order and delivering, on their asumming outputs, data which applied to the inputs of the following bank.

**Patentansprüche**

1. Vorrichtung zur Bestimmung der diskreten Kosinustransformierten $X_k$ eines durch N digitale Abtastwerte $x_0$, ...., $x_i$, ... $x_{N-1}$ dargestellten Signals x, wobei N eine Potenz $2^n$ von 2 ist:

$$X_k = \sum_{i=0}^{N-1} x_i \cdot \cos\left[(2\pi/4N)(2i+1)k\right]$$

dadurch gekennzeichnet, daß sie eine Faltungseinheit (10) zwischen den Abtastwerten $x_i$ und einer gespeicherten Folge von Abtastwerten $w_i(N)$ :

$$w_i^{(N)} = 1 + \sum_{j=0}^{n-1} \cos\left[ (2\pi/4N) \left\langle 5^i \right\rangle_{4N} 2^j \right]$$

umfaßt, und daß sie darüber hinaus eine Gesamtheit in mehrere Gruppen aufgeteilter elementarer, identischer Schaltungen (14,16,18) umfaßt, von denen jede zwei Eingänge und zwei Ausgänge aufweist, deren einer die Summe und deren anderer die Differenz der zwei Eingänge liefert, wobei die elementaren Schaltungen der ersten Gruppe (14) auf ihren zwei Eingängen die Abtastwerte des Faltungsprodukts der durch N/2 untereinander getrennten Indices empfangen und direkt die ungeraden Werte (X1, X3, ...) liefern, während die Schaltungen der folgenden Gruppe durch Kombination der Summen die geraden Werte (X0, ..., X8) aufeinanderfolgend auf ihren Subtraktionsausgängen liefern.

2. Vorrichtung zur Bestimmung der diskreten Kosinustransformierten $X_k$ eines durch N digitale Abtastwerte $x_0$, ...., $x_i$, ... $x_{N-1}$ dargestellten Signals x, wobei N eine Potenz $2^n$ von 2 ist:

$$X_k = \sum_{i=0}^{N-1} x_i \cdot \cos\left[ (2\pi/4N)(2i+1)k \right] \qquad (1)$$

dadurch gekennzeichnet, daß sie umfaßt:
- Mittel (20), um die Abtastwerte $x_i$ einer Ganzzahltransformation (TNE) zu unterziehen und eine Folge $A_k$ zu liefern:

$$A_k = \sum_{i=0}^{N-1} \alpha^{ik} \cdot x_i \qquad \text{Modulo } M,$$

wobei $\alpha$ eine Konstante ist, die gleich einer positiven N-ten Wurzel der Einheit Modulo M ist,
- Mittel zum Abspeichern einer Folge $B_k$, welche die TNE einer gespeicherten Folge von Abtastwerten $w_i(N)$ darstellt, wobei diese Folge die Form:

$$B_k = \sum_{i=0}^{N-1} \alpha^{ik} \cdot w_i^{(N)} \qquad \text{Modulo } M$$

aufweist, und

$$w_i(N) = 1 + \sum_{j=0}^{n-1} \cos\left[ (2\pi/4N) \left\langle 5^i \right\rangle_{4N} 2^j \right]$$

- Mittel, um ein Produkt Modulo M (M ist eine ganze Zahl, und $\alpha$ ist eine positive N-te Wurzel von M) der Folge $A_k$ und der Folge $B_k$ zu bilden,
- wobei die TNE-Mittel eine Gesamtheit von in verschiedene aufeinanderfolgende Gruppen (28,30) eingeteilten, elementaren, identischen Schaltungen umfassen, wobei jede elementare Schaltung zwei Eingänge und zwei Ausgänge aufweist, deren einer die Summe und deren anderer die Differenz der beiden Eingänge liefert, die N/2 Elementarschaltungen der ersten Gruppe auf ihren Eingängen die Abtastwerte mit Indices, die durch einen Abstand von N/2 getrennt sind, empfangen und auf ihren subtraktiven Ausgängen die TNE $A_k$ ungerader Ordnung liefern und auf ihren additiven Ausgängen Daten liefern, welche auf die Eingänge der folgenden Gruppe angelegt werden.

Fig. 1

Fig. 2

Fig. 3

Fig. 4